# EUROPEAN PATENT APPLICATION

(11) **EP 3 466 777 A1**
(43) Date of publication of application: **10.04.2019**
(21) Application number: 18198833.8
(22) Date of filing: 05.10.2018
(51) Int. Cl.: B60T 1/00, F16H 63/34

(54) **PARKING LOCK MECHANISM**

(30) Priority: 05.10.2017 JP 2017195509
(71) Applicant: TOYOTA JIDOSHA KABUSHIKI KAISHA, Toyota-shi, Aichi-ken, 471-8571 (JP)
(72) Inventor: BANSHOYA, Hidehiko, Aichi-ken, 471-8571 (JP); TOMITA, Mitsuaki, Aichi-ken, 471-8571 (JP); MIYAGAWA, Takeshi, Aichi-ken, 471-8571 (JP)
(74) Representative: D Young & Co LLP

(57) **Abstract**

A parking lock mechanism (46) comprises a parking gear (48) integrally disposed on a rotating member (14) mechanically coupled to a drive wheel (36); a plate-shaped parking pawl (52) provided with a lock claw (50) configured to mesh with the parking gear and pivoted for switching between a lock state in which the lock claw is meshed with the parking gear and a non-lock state in which meshing between the lock claw (50) and the parking gear is released; and a cam mechanism (56) including a cam (54) in contact with the parking pawl (52) and moving the cam (54) in parallel with a rotation axis (CL) of the parking gear to pivot the parking pawl (52), the parking pawl (52) having a plate thickness made larger in a portion provided with the lock claw (50) as compared to the other portions of the parking pawl (52). The portion provided with the lock claw (50) of the parking pawl (52) has a surface that is formed on the front side in a movement direction of the cam (54) at the time of switching from the non-lock state to the lock state and that bulges in the movement direction.

## Description

### BACKGROUND OF THE INVENTION

### Field of the Invention

The present invention relates to a structure of a parking lock mechanism included in a vehicle.

### Description of the Related Art

There is known a parking lock mechanism including a parking gear integrally disposed on a rotating member mechanically coupled to a drive wheel, a parking pawl having a lock claw capable of meshing with the parking gear and allowing the lock claw to mesh with the parking gear for making the parking gear non-rotatable, a cam coming into contact with the parking pawl and moving parallel to a rotation axis of the parking gear to pivot the parking pawl, and an actuator reciprocating the cam in a direction of the rotation axis of the parking gear. Patent Document 1 discloses a configuration in which a parking pawl (a ratchet 1 in Patent Document 1) constituting a parking lock mechanism has a plate thickness made larger in a portion provided with a lock claw (a ratchet tooth) than the thickness of the other portions of the parking pawl. Specifically, the portion provided with the lock claw has a bulging surface on the rear side in a movement direction of the cam moving toward the locked position of the parking lock mechanism, so that the plate thickness is made larger.

### Citation List

Patent Document 1: Japanese Laid-Open Patent Publication No. 2011-20671
Patent Document 2: Japanese Laid-Open Patent Publication No. 2012-218071
Patent Document 3: Japanese Laid-Open Patent Publication No. 2011-183449
Patent Document 4: Japanese Unexamined Utility Model Application Publication No. 61-147656

### SUMMARY OF THE INVENTION

### Technical Problem

If the plate thickness is made larger in the portion provided with the lock claw of the parking pawl as in Patent Document 1, a positional change in the center of gravity of the parking pawl may make a distance larger between the position of the center of gravity and a line of action of a cam load input from the cam to the parking pawl, so that a rotation moment acting on the parking pawl may increase. As a result, the parking pawl tends to tilt, which may make a behavior unstable when the lock claw of the parking pawl is meshed with the parking gear.

The present invention was conceived in view of the situations and it is therefore an object of the present invention to provide a parking lock mechanism capable of restraining a behavior from becoming unstable when a lock claw of a parking pawl is meshed with a parking gear.

### Solution to Problem

To achieve the above object, a first aspect of the present invention provides a parking lock mechanism comprising: (a) a parking gear integrally disposed on a rotating member mechanically coupled to a drive wheel; (b) a plate-shaped parking pawl provided with a lock claw configured to mesh with the parking gear and pivoted for switching between a lock state in which the lock claw is meshed with the parking gear and a non-lock state in which meshing between the lock claw and the parking gear is released; and (c) a cam mechanism including a cam in contact with the parking pawl and moving the cam in parallel with a rotation axis of the parking gear to pivot the parking pawl, (d) the parking pawl having a plate thickness made larger in a portion provided with the lock claw as compared to the other portions of the parking pawl, wherein (e) the portion provided with the lock claw of the parking pawl has a surface that is formed on the front side in a movement direction of the cam at the time of switching from the non-lock state to the lock state and that bulges in the movement direction.

A second aspect of the present invention provides the parking lock mechanism recited in the first aspect of the invention, further comprising a return spring urging the parking pawl to the non-lock state side.

A third aspect of the present invention provides the parking lock mechanism recited in the first or second aspect of the invention, wherein (a) the cam is provided with a conical tapered surface, and wherein (b) a taper-shaped notch configured to be brought into contact with the tapered surface of the cam is formed on a surface of the parking pawl located on the rear side in the movement direction of the cam at the time of switching from the non-lock state to the lock state.

A fourth aspect of the present invention provides the parking lock mechanism according to any one of the first to third aspects of the invention, wherein (a) the cam mechanism includes a parking rod moving parallel to the rotation axis of the parking gear, and a cam spring urging the cam toward a leading end of the parking rod, wherein (b) the cam is attached to the parking rod, the cam is inserted through the parking rod relatively movably in an axial direction with respect to the parking rod and is urged toward the leading end of the parking rod by the cam spring, and (c) the leading end of the parking rod is provided with a large diameter portion coming into contact with the cam and restricting the movement of the cam.

### Advantageous Effects of Invention

According to the parking lock mechanism recited in the first aspect of the invention, the portion provided with the lock claw of the parking pawl has the surface that is formed on the front side in the movement direction of the cam at the time of switching from the non-lock state to the lock state and that bulges in the movement direction, and therefore, for example, as compared to the case that the surface formed on the rear side in the movement direction of the cam bulges, the distance can be shortened between the position of the center of gravity of the parking pawl and the action line of the cam load input from the cam to the parking pawl. Thus, the rotation moment acting on the parking pawl can be restrained from increasing due to an increase in the plate thickness of the parking pawl. Consequently, the tilt of the parking pawl is suppressed, so that the behavior when the lock claw is meshed with the parking gear can be restrained from becoming unstable.

According to the parking lock mechanism recited in the second aspect of the invention, since the return spring urging the parking pawl toward the non-lock side is included, the parking lock mechanism can be prevented from switching to the lock state without driver's intention.

According to the parking lock mechanism recited in the third aspect of the invention, since the notch of the parking pawl is brought into contact with the tapered surface of the cam, the parking pawl can smoothly be pivoted when the cam moves to the lock side.

According to the parking lock mechanism of the fourth aspect of the invention, when the parking gear is at the rotation position where the parking gear is not normally meshed with the lock claw of the parking pawl, the parking pawl is restricted from pivoting; however, since the cam spring is compressed in this case, the axial movement of the parking rod is permitted. When the parking gear is rotated in this state to a rotational position where the parking gear and the lock claw can be meshed with each other, the parking pawl is promptly rotated by urging force of the cam spring, and the parking gear and the lock claw are promptly meshed with each other.

### BRIEF DESCRIPTION OF DRAWINGS

Fig. 1 is a skeleton diagram for explaining a schematic configuration of a hybrid vehicle to which the present invention is applied.
Fig. 2 is a view of a configuration of a parking lock mechanism of Fig. 1.
Figs. 3A and 3B show a state in which a lock claw of a parking pawl is normally meshed with meshing teeth of a parking gear in the parking lock mechanism of Fig. 2.
Figs. 4A and 4B show a state in which the lock claw is not normally meshed with the meshing teeth in the parking lock mechanism of Fig. 2.
Fig. 5 is a perspective view of the parking pawl.
Figs. 6A and 6B are a plan view of the parking pawl.
Figs. 7A and 7B show a relationship between a cam load input from a cam when the parking lock mechanism is actuated to the lock side and a center of gravity of the parking pawl.
Fig. 8 is a view of a state where a conventional parking pawl is mistakenly assembled in the parking lock mechanism of this example.
Fig. 9 is a view of a state where the present parking pawl is mistakenly assembled in a conventional parking lock mechanism.

### DESCRIPTION OF THE PREFERRED EXAMPLES

In this description, a lock side of a parking lock mechanism refers to a side of the parking lock mechanism on which a lock claw of a parking pawl is meshed with meshing teeth of a parking gear, and a non-lock side of the parking lock mechanism refers to a side on which the meshing is released between the lock claw of the parking pawl and the meshing teeth of the parking gear. A lock state refers to a state in which the lock claw of the parking pawl is meshed with the meshing teeth of the parking gear due to actuation of the parking lock mechanism to the lock side, and a non-lock state refers to a state in which the meshing is released between the lock claw of the parking pawl and the meshing teeth of the parking gear due to actuation of the parking lock mechanism to the non-lock side.

In this description, a meshing state refers to a state in which the lock claw of the parking pawl is meshed normally with the meshing teeth of the parking gear due to actuation of the parking lock mechanism to the lock side, and a non-meshing state refers to a state in which the lock claw of the parking pawl is not meshed with the meshing teeth of the parking gear even when the parking lock mechanism is actuated to the lock side. Therefore, the lock state and the meshing state of the parking lock mechanism have substantially the same meaning, while the non-lock state and the non-meshing state of the parking lock mechanism have different meanings.

An example of the present invention will now be described in detail with reference to the drawings. In the following example, the figures are simplified or deformed as appropriate for description and portions are not necessarily precisely drawn in terms of dimension ratio, shape, etc.

### Example

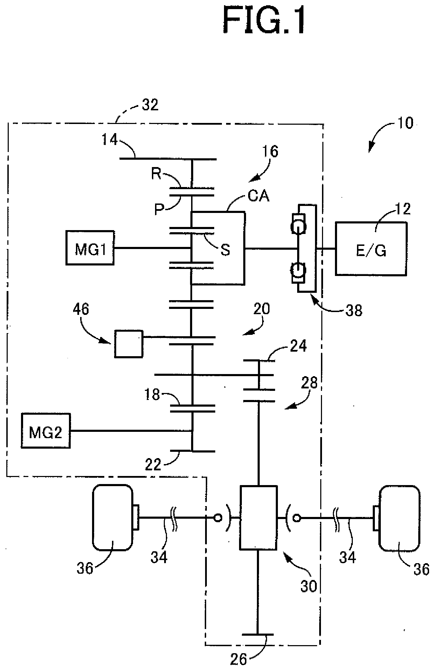

Fig. 1 is a skeleton diagram for explaining a schematic configuration of a hybrid vehicle 10 (hereinafter referred to as a vehicle 10) to which the present invention is applied. In Fig. 1, the vehicle 10 includes an engine 12 as a drive power source for running and a power transmission device 32. The power transmission device 32 includes a power distribution mechanism 16 for distributing a power output from the engine 12 to a first electric motor MG1 and a counter drive gear 14 (hereinafter referred to as a drive gear 14), a counter gear pair 20 made up of the drive gear 14 and a counter driven gear 18 (hereinafter referred to as a driven gear 18) meshed with the drive gear 14, a second electric motor MG2 coupled to the driven gear 18 via a reduction gear 22 in a power transmittable manner, a final gear pair 28 made up of a differential drive gear 24 and a differential driven gear 26, a differential gear device 30 (final reduction gear), and a pair of left and right axles 34. This power transmission device 32 is suitably used for an FF (front-engine front-drive) type vehicle in which the device 32 is transversely-mounted on the vehicle 10. The driven gear 18 and the differential drive gear 24 are configured to integrally rotate.

In the power transmission device 32 configured as described above, the power of the engine 12 is transmitted through the power distribution mechanism 16 and the drive gear 14 to the driven gear 18, while a power of the second electric motor MG2 is transmitted through the reduction gear 22 to the driven gear 18, and the power is transmitted from the driven gear 18 sequentially through the final gear pair 28, the differential gear device 30, and the pair of the left and right axles 34 (drive shafts, D/S) to left and right drive wheels 36. A damper device 38 absorbing torque variations is interposed between the engine 12 and the power distribution mechanism 16.

The power distribution mechanism 16 is made up of a known single pinion gear type planetary gear device including as rotating elements a sun gear S, a pinion gear P, a carrier CA supporting the pinion gear P in a rotatable and revolvable manner, and a ring gear R meshed with the sun gear S via the pinion gear P. The sun gear S is coupled to the first electric motor MG1 in a power transmittable manner, the carrier CA is coupled to the engine 12 in a power transmittable manner, and the ring gear R is coupled to the drive gear 14 in a power transmittable manner. As a result, since the sun gear S, the carrier CA, and the ring gear R are made rotatable relative to each other, the power of the engine 12 is distributed to the first electric motor MG1 and the drive gear 14. The power distribution mechanism 16 is put into, for example, a continuously variable transmission state (electrically controlled CVT state) to function as an electrically controlled continuously variable transmission in which a rotation speed of the ring gear R coupled to the drive gear 14 is continuously varied regardless of a predetermined rotation of the engine 12. In other words, the power distribution mechanism 16 and the power transmission device 32 including the power distribution mechanism 16 act as an electrically controlled differential portion (electrically controlled continuously variable transmission portion) with a differential state of the power distribution mechanism 16 controlled by controlling an operating state of the first electric motor MG1 acting as a differential electric motor.

A parking lock mechanism 46 is disposed at a side of the drive gear 14. The parking lock mechanism 46 stops rotation of the drive gear 14 and thereby stops rotation of the drive wheels 36. Since the drive gear 14 is mechanically coupled to the drive wheels 36 via the counter gear pair 20, the final gear pair 28, the differential gear device 30, and the left and right axles 34, the rotation of the drive wheels 36 is stopped when the rotation of the drive gear 14 is stopped. The drive gear 14 corresponds to a rotating member of the present invention.

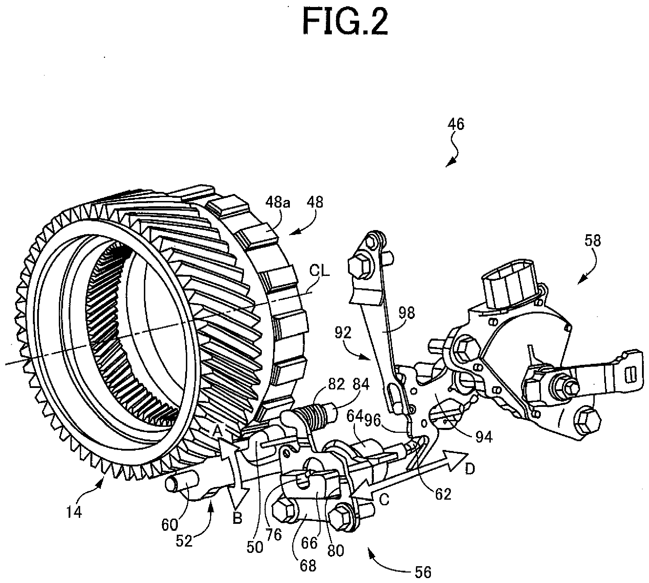

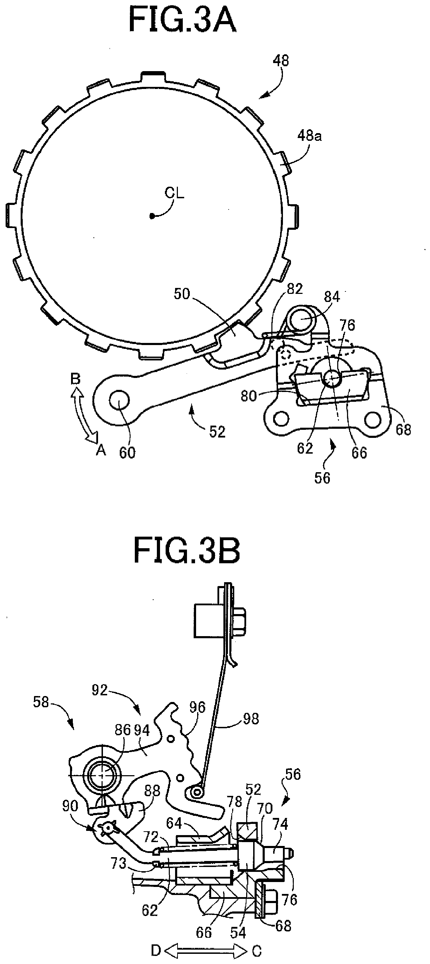

Fig. 2 is a view of an overall configuration of the parking lock mechanism 46 of Fig. 1. The parking lock mechanism 46 includes a parking gear 48 formed integrally with the drive gear 14, a parking pawl 52 provided with a lock claw 50 capable of meshing with the parking gear 48, a cam mechanism 56 having a cam 54 (see Fig. 3B) in contact with the parking pawl 52 and moving the cam 54 parallel to a rotation axis CL (hereinafter referred to as an axis CL) of the parking gear 48 to pivot the parking pawl 52, and an actuator 58 driving the cam mechanism 56.

The parking gear 48 has a plurality of meshing teeth 48a formed at equal angular intervals in the circumferential direction for meshing with the lock claw 50 of the parking pawl 52. When the meshing teeth 48a mesh with the lock claw 50, the rotation of each of the parking gear 48 and the drive gear 14 is stopped, and the rotation of the drive wheels 36 mechanically coupled to the drive gear 14 is also stopped.

The parking pawl 52 is a plate-shaped member extending in the longitudinal direction and provided with the lock claw 50 capable of meshing with the meshing teeth 48a of the parking gear 48. The parking pawl 52 is configured to be pivotable around a pivoting shaft 60 parallel to the axis CL, and when the parking pawl 52 pivots toward an arrow A shown in Fig. 2, the lock claw 50 and the meshing teeth 48a are meshed and the lock state is established, and when the parking pawl 52 pivots toward an arrow B, the meshing between the lock claw 50 and the meshing teeth 48a is released and the non-lock state is established. In this way, the parking pawl 52 is pivoted to implement a function of switching between the lock state in which the lock claw 50 is meshed with the meshing teeth 48a of the parking gear 48 and the non-lock state in which the meshing between the lock claw 50 and the meshing teeth 48a of the parking gear 48 is released.

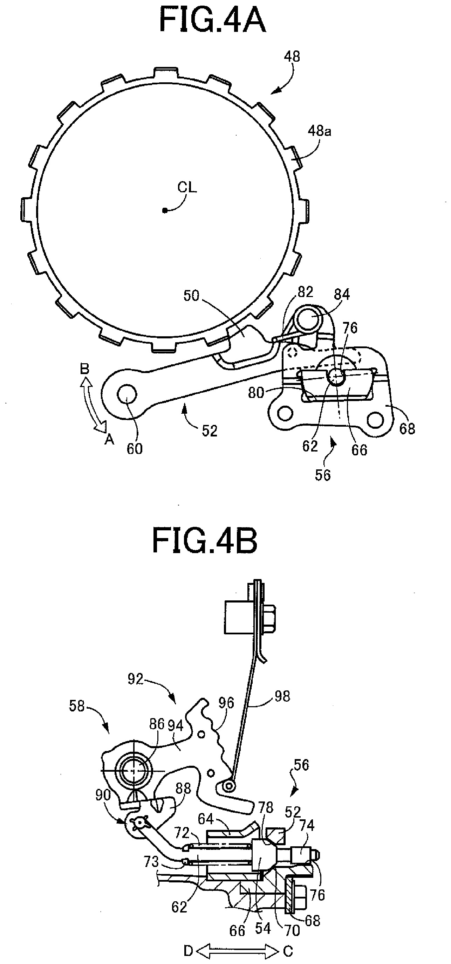

The structure of the cam mechanism 56 will be described. Figs. 3A and 3B show a state (the meshing state, the lock state) in which the lock claw 50 of the parking pawl 52 is meshed with the meshing teeth 48a of the parking gear 48 in the parking lock mechanism 46, and Figs. 4A and 4B show a state (non-meshing state) in which the lock claw 50 of the parking pawl 52 is not normally meshed with the meshing teeth 48a of the parking gear 48 in the parking lock mechanism 46. Each of Figs. 3A and 4A corresponds to a view of the parking gear 48, the parking pawl 52, and the cam mechanism 56 in the direction of the axis CL, and each of Figs. 3B and 4B corresponds to the cam mechanism 56 (cross-sectional view) and the actuator 58. The upper side on the plane of each of Figs. 3A and 3B, and 4A and 4B corresponds to the vertically upper side of the vehicle 10. As shown in Figs. 3A and 3B, and 4A and 4B, even when the parking lock mechanism 46 is actuated to the lock side, the mechanism 46 is switched to the meshing state in which the lock claw 50 of the parking pawl 52 is normally meshed with the meshing teeth 48a of the parking gear 48 (Fig. 3A) and the non-meshing state in which the lock claw 50 is not normally meshed with the meshing teeth 48a (Fig. 4A) depending on a rotation position of the parking gear 48.

The cam mechanism 56 includes the cam 54 in contact with the parking pawl 52, a parking rod 62 moving parallel to the axis CL to move the cam 54 attached at the distal side of the parking rod 62, a cover 64 housing the parking rod 62, a parking sleeve 66 guiding the cam 54, a plate 68 holding the parking sleeve 66, and a cam spring 72 applying an urging force to the cam 54.

The cam 54 is an annular member provided with a conical tapered surface 70 and is attached to the leading end side of the parking rod 62. Specifically, the cam 54 is inserted through the parking rod 62 relatively movably in the axial direction with respect to the parking rod 62. The cam spring 72 is made up of a coil spring with the parking rod 62 penetrating therethrough. The cam spring 72 is interposed between a ring 73 immovably fixed to the parking rod 62 and the cam 54 to urge the cam 54 toward the leading end of the parking rod 62. The leading end of the parking rod 62 is provided with a large diameter portion 74 restricting the axial movement of the cam 54. Therefore, the cam 54 is urged toward the leading end of the parking rod 62 by the cam spring 72 and is brought into contact with the large diameter portion 74 formed on the leading end side of the parking rod 62 in a normal state as shown in Fig. 3B, when the parking lock mechanism 46 is switched to the meshing state.

The parking rod 62 is made movable via the actuator 58 in a direction C and a direction D (i.e., the axial direction of the parking rod 62) indicated by arrows of Figs. 2, 3B and 4B. Figs. 3B and 4B show a state in which the parking rod 62 is moved in the direction of the arrow C (i.e., toward the plate 68). The parking sleeve 66 is provided with a guide groove 76 guiding the cam 54 when the cam 54 is moved together with the parking rod 62. The cam 54 is moved along the guide groove 76.

A hole 80 through which the parking sleeve 66 penetrates is formed in the plate 68. A support shaft 84 supporting a return spring 82 is disposed on the plate 68. The return spring 82 is in contact with the parking pawl 52 and constantly urges the parking pawl 52 to the non-lock side where the meshing is released between the lock claw 50 of the parking pawl 52 and the meshing teeth 48a of the parking gear 48. Therefore, when the parking lock mechanism 46 is switched from the lock state to the non-lock state, the parking pawl 52 is promptly pivoted to the non-lock side by the return spring 82. Additionally, the parking lock mechanism 46 is prevented from switching to the lock state without driver's intention.

The actuator 58 rotates a rotating shaft 86 to move the parking rod 62 in the axial direction. The rotating shaft 86 is coupled via an intermediate member 88 to a shaft end portion of the parking rod 62 on the side opposite to the attachment position of the cam 54. Therefore, when the rotating shaft 86 rotates, a position of a coupling portion 90 connecting the intermediate member 88 and the parking rod 62 changes, and the parking rod 62 and the cam 54 move in the axial direction in accordance with the position of the connecting portion 90.

The rotating shaft 86 is provided with a detent mechanism 92. The detent mechanism 92 includes a detent plate 94 interlocking with the rotating shaft 86 and a detent spring 98 having a leading end portion pressed against a wavy surface 96 described later formed on the detent plate 94. The detent plate 94 is provided with the wavy surface 96 having crests and troughs formed alternately and continuously. The leading end portion of the detent spring 98 is pressed against the wavy surface 96, and when the rotating shaft 86 reaches a rotation position corresponding to a predetermined shift position, the leading end portion of the detent spring 98 is moved on the wavy surface 96 to the position of the trough corresponding to the predetermined shift position.

The actuation of the parking lock mechanism 46 configured as described above will be described with reference to Figs. 3A and 3B, and 4A and 4B. First, description will be made of the case that the parking lock mechanism 46 is actuated to the lock side and enters the normal meshing state as shown in Figs. 3A and 3B. The parking lock mechanism 46 is actuated, for example, when a P-lock switch not shown is pushed by a driver.

When the P-lock switch is pushed and the rotating shaft 86 rotates counterclockwise, the detent plate 94 is also pivoted counterclockwise around the rotating shaft 86. In this case, the leading end portion of the detent spring 98 is pressed against the trough formed at one end of the wavy surface 96 of the detent plate 94. The parking rod 62 moves in the direction of the arrow C (to the right on the plane) of Fig. 3B, and the cam 54 disposed on the leading end side of the parking rod 62 is also moved in the direction of the arrow C in conjunction with the parking rod 62. In this case, the cam 54 moves along the guide groove 76 of the parking sleeve 66, so that the tapered surface 70 of the cam 54 moves while pushing away a notch 78 formed in the parking pawl 52, and the parking pawl 52 is pushed upward in the vertical direction. In other words, as the cam 54 moves in the direction of the arrow C, the parking pawl 52 is pivoted in the direction of the arrow A around the pivoting shaft 60. When the parking pawl 52 is pivoted in the direction of the arrow A, the lock claw 50 of the parking pawl 52 is meshed with the meshing teeth 48a of the parking gear 48, resulting in the lock state in which the rotation of the parking gear 48 is stopped.

Description will be made of the case that even though the parking lock mechanism 46 is actuated to the lock side, the mechanism 46 enters the non-meshing state in which the lock claw 50 is not meshed with the meshing teeth 48a, with reference to Figs. 4A and 4B.

When the P-lock switch is pushed and the rotating shaft 86 rotates counterclockwise, the detent plate 94 is also pivoted counterclockwise around the rotating shaft 86, and the parking rod 62 is moved in the direction of the arrow C (to the right on the plane) of Fig. 4B. In the non-meshing state of the parking lock mechanism 46 shown in Fig. 4A, a top portion (top surface) of the meshing tooth 48a of the parking gear 48 and a top portion (top surface) of the lock claw 50 of the parking pawl 52 come into contact with each other, so that the parking pawl 52 is prevented from pivoting. Accordingly, the cam 54 cannot push up the parking pawl 52 and move in the direction of the arrow C and is stopped at a position of contact between the tapered surface 70 of the cam 54 and the notch 78 of the parking pawl 52 as shown in Fig. 4B. In this case, the cam spring 72 contracts to allow the parking rod 62 to move in the axial direction, which changes the relative positions between the cam 54 and the parking rod 62, so that the cam 54 is separated from the large diameter portion 74. Additionally, as the cam spring 72 contracts, an urging force is generated in a direction in which the cam 54 is moved toward the large diameter portion 74.

When the vehicle 10 moves from the state shown in Figs. 4A and 4B, and the parking gear 48 rotates to a rotation position at which the top portion of the lock claw 50 is no longer in contact with the top portion of the meshing tooth 48a, i.e., the lock claw 50 and the meshing teeth 48a can be meshed, the cam 54 moves toward the large diameter portion 74 due to the urging force of the cam spring 72, and the parking pawl 52 is vertically pushed upward by the cam 54. As a result, the parking lock mechanism 46 is promptly switched to the meshing state (i.e., the lock state) in which the meshing teeth 48a and the lock claw 50 are meshed with each other as shown in Fig. 3A. The return spring 82 constantly urges the parking pawl 52 vertically downward, i.e., toward the non-lock side where the meshing is released between the lock claw 50 and the meshing teeth 48a; however, since the urging force of the cam spring 72 is designed to be greater than the urging force of the return spring 82, the parking pawl 52 is pushed vertically upward against the urging force of the return spring 82.

If the P-lock switch is pushed by the driver while the vehicle 10 has a certain vehicle speed, the parking pawl 52 is repelled by the parking gear 48, so that the meshing teeth 48a are not meshed with the lock claw 50. In this case, since the cam spring 72 and the return spring 82 expand and contract, the parking pawl 52 is repelled by the parking gear 48 while receiving a load from the cam spring 72 and the return spring 82 and repeatedly collides with the parking gear 48 in accordance with a rotational inertia of the parking pawl 52, (hereinafter, such a phenomenon is referred to as a ratchet behavior).

The ratchet behavior does not occur at a predetermined vehicle speed V1 (hereinafter referred to as "fitting vehicle speed V1") or less, and the meshing teeth 48a of the parking gear 48 are meshed with the lock claw 50 of the parking pawl 52, so that the parking lock mechanism 46 enters the lock state. The fitting vehicle speed V1 is determined in design based on the rotational inertia of the parking pawl 52, the rigidity of the cam spring 72 and the return spring 82, etc. For example, when the rotational inertia of the parking pawl 52 increases, the fitting vehicle speed V1 decreases. If the fitting vehicle speed V1 becomes too low, the vehicle 10 slightly slides down and the parking gear 48 rotates so that the vehicle speed V exceeds the fitting vehicle speed V1 while the non-meshing state is formed on a steep slope road, for example. Therefore, the lock claw 50 of the parking pawl 52 cannot be meshed with the meshing teeth 48a of the parking gear 48, so that the ratchet behavior occurs. This makes it difficult to switch the parking lock mechanism 46 to the lock state, causing a problem of deterioration in parking performance.

On the other hand, when it is expected that a large load is input to the lock claw 50 of the parking pawl 52, the plate thickness of the parking pawl 52 may be increased so as to reduce the surface pressure applied to the lock claw 50 of the parking pawl 52. However, when the plate thickness of the parking pawl 52 is made larger, the rotational inertia of the parking pawl 52 is increased, so that the parking performance is deteriorated as described above, and since the position of the center of gravity of the parking pawl 52 is changed, a rotation moment acting on the parking pawl 52 is increased, so that the parking pawl 52 may tilt when the ratchet behavior occurs. Consequently, the parking pawl 52 may come into contact with the parking gear 48 and the cam 54 at non-preferable positions, so that the durability of components such as the parking gear 48 and the cam 54 may be reduced. For example, when the parking pawl 52 tilts and a corner of the parking pawl 52 comes into contact with the tapered surface 70 of the cam 54, the tapered surface 70 is easily damaged. Prevention of this damage requires redesigning other peripheral components such as the parking rod 62, the cam 54, and the cam spring 72 to appropriate specifications in accordance with a change in the shape of the parking pawl 52.

To solve the problem described above, the parking pawl 52 in this example has a plate thickness made larger in the portion provided with the lock claw 50 as compared to the other portions of the parking pawl 52. By increasing the plate thickness of the parking pawl 52 in the portion provided with the lock claw 50 in this way, the surface pressure applied to the lock claw 50 is reduced, so that the large load can be received. Additionally, since the portion increased in the plate thickness is limited to the portion provided with the lock claw 50, the increase in the rotational inertia of the parking pawl 52 is suppressed to the minimum, and the decrease in the fitting vehicle speed V1 is also suppressed. Additionally, the increase in the plate thickness makes the rigidity of the lock claw 50 higher, which enables use in the actuator 58 having a relatively large torque. The parking pawl 52 is manufactured by forging or casting.

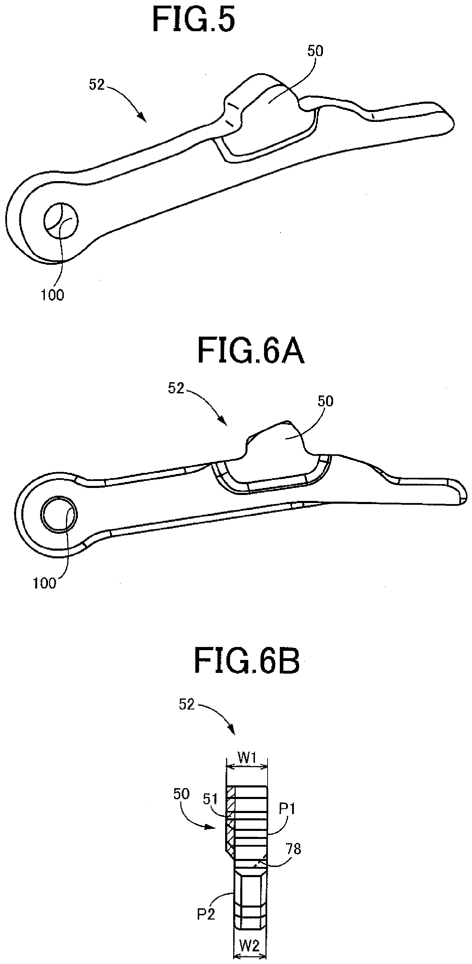

Fig. 5 is a perspective view of the parking pawl 52, and Figs. 6A and 6B are a plan view of the parking pawl 52. As shown in Figs. 5 and 6A and 6B, the parking pawl 52 is made up of a plate-like member having elongated shape. A through-hole 100 is formed on one longitudinal side of the parking pawl 52 for allowing the pivoting shaft 60 to penetrate therethrough. The parking pawl 52 is provided with the lock claw 50 capable of meshing with the meshing teeth 48a of the parking gear 48. The notch 78 indicated by a broken line of Fig. 6B is formed in the parking pawl 52 and comes into contact with the cam 54 when the parking lock mechanism 46 is actuated to the lock side. Specifically, the notch 78 having the tapered shape and to be brought into contact with the tapered surface 70 of the cam 54 is formed on a surface P1 of the parking pawl 52 located on the rear side in the movement direction of the cam 54 when the parking lock mechanism 46 switches from the non-lock state to the lock state.

The parking pawl 52 has a plate thickness made larger (an increased plate thickness) in the portion provided with the lock claw 50 as compared to the other portions of the parking pawl 52. Specifically, as shown on Fig. 6B, a dimension W1 in a thickness direction of a plate (plate thickness direction) in the portion of the parking pawl 52 provided with the lock claw 50 is made larger as compared to a dimension W2 in the thickness direction of plate other than the portion of the parking pawl 52 provided with the lock claw 50 (W1>W2).

More specifically, in the portion provided with the lock claw 50, the plate thickness is increased since a surface P2 opposite to the surface P1 on the side of the notch 78 brought into contact with the cam 54, in other words, the surface P2 opposite to the surface P1 brought into contact with the cam 54, bulges toward the side away from the surface P1 relative to the surface P2. The surface P2 is a surface formed on the front side in the movement direction of the cam 54 in the case of actuation of the parking lock mechanism 46 to the lock side (i.e., switching of the parking lock mechanism 46 from the non-lock state to the lock state). As a result, the portion of the parking pawl 52 provided with the lock claw 50 has the plate thickness made larger since the surface formed on the front side in the movement direction of the cam 54 in the case of actuation of the parking lock mechanism 46 to the lock side (i.e., switching of the parking lock mechanism 46 from the non-lock state to the lock state) bulges in the movement direction of the cam 54. Hereinafter, the portion of the lock claw 50 bulging from the surface P2 indicated by diagonal lines of Fig. 6B is defined as a plate thickness increasing portion 51.

Description will hereinafter be made of the effect of bulging of the surface P2 side of the parking pawl 52, in other words, formation of the plate thickness increasing portion 51 on the surface P2 side, in the lock claw 50 as described above.

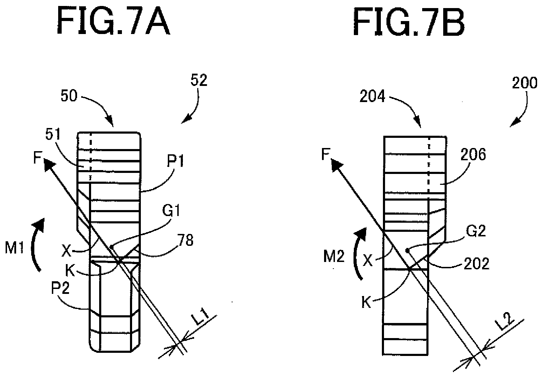

Figs. 7A and 7B show a relationship between a cam load F input from the cam 54 when the parking lock mechanism 46 is actuated to the lock side and a center of gravity G of the parking pawl, respectively. Fig. 7A corresponds to the parking pawl 52 of this example, and Fig. 7B corresponds to a parking pawl 200 for comparison. The parking pawl 200 is provided with a notch 202 brought into contact with the cam and a lock claw 204 capable of meshing with the meshing teeth 48a of the parking gear 48 and has the plate thickness made larger in the portion provided with the lock claw 204 as compared to the other portions of the parking pawl 200. However, in the parking pawl 200, the plate thickness is increased by forming a plate thickness increasing portion 206 on the surface on the side provided with the notch 202. Therefore, the parking pawl 52 and the parking pawl 200 have the plate thickness increasing portions 51, 206 formed on the different surfaces.

G1 of Fig. 7A denotes a position of the center of gravity (hereinafter, a center of gravity G1) of the parking pawl 52, and G2 of Fig. 7B denotes a position of the center of gravity (hereinafter, the center of gravity G2) of the parking pawl 200. When the parking lock mechanism 46 is actuated, the cam load F acts on the parking pawl 52 from the cam 54. This cam load F perpendicularly acts on the notch 78. Similarly, also in the parking pawl 200, the cam load F perpendicularly acts on the notch 202.

Since the plate thickness increasing portion 51 is formed on the surface P2 side of the parking pawl 52, the center of gravity G1 of the parking pawl 52 moves toward the plate thickness increasing portion 51 in the plate thickness direction (the left-right direction on the plane of Fig. 7A). In this regard, a distance L1 between the center of gravity G1 and an action line X of the cam load F is shortened. This distance L1 corresponds to a length of segment from the action line X to the center of gravity G1 that is a portion of a straight line extending perpendicularly from the action line X of the cam load F and passing through the center of gravity G1. The action line X of the cam load F corresponds to a straight line drawn in the force direction through a point of action of the cam load F (a point K on which the cam load F shown in Fig. 7 acts).

On the other hand, the parking pawl 200 has the plate thickness increasing portion 206 formed on the surface on the side provided with the notch 202, so that the center of gravity G2 of the parking pawl 200 moves toward the plate thickness increasing portion 206 in the plate thickness direction (rightward in Figs. 7A and 7B). In this regard, a distance L2 between the center of gravity G2 and the action line X of the cam load F becomes longer than the distance L1 (L2>L1). As described above, the distance L1 between the center of gravity G1 and the action line X of the cam load F is shortened in the parking pawl 52, so that a rotation moment M1 (=F*L1) calculated as the product of the cam load F and the distance L1 is smaller than a rotation moment M2 (=F*L2) generated in the parking pawl 200 (M1<M2). Therefore, in the parking pawl 52, the tilt of the parking pawl 52 is suppressed during the ratchet behavior, and the parking pawl 52 comes into contact with the parking gear 48 and the cam 54 during the ratchet behavior at positions intended in design, so that the reduction in durability of components constituting the parking lock mechanism 46 is also suppressed. Additionally, since the tilt of the parking pawl 52 is suppressed during the ratchet behavior, it is no longer necessary to redesign other peripheral components so as to suppress the tilt, so that an existing device can be used.

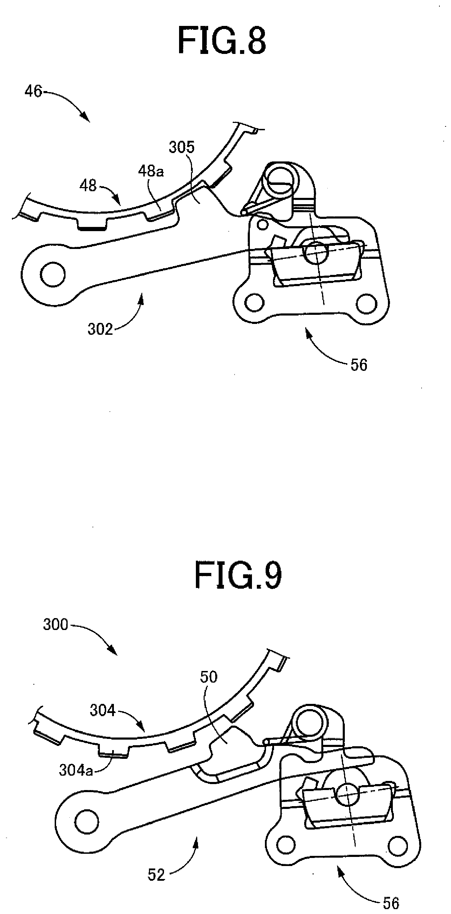

From the above, although an existing device is usable instead of the parking pawl 52, when the parking pawl 52 is used for an existing device, it is desirable to make the height of the lock claw 50 lower and the outer diameter of the parking gear 48 larger than a conventional parking pawl 302 (see Fig. 8) entirely having the same plate thickness. By designing the parking pawl 52 in this way, even if the conventional parking pawl 302 is mistakenly assembled at the time of assembly of the parking lock mechanism 46 of this example, a lock claw 305 of the parking pawl 302 and the meshing teeth 48a of the parking gear 48 are always meshed with each other as shown in Fig. 8, so that an assembly error can easily be detected without using a special detection device. Similarly, even if the parking pawl 52 of this example is mistakenly assembled at the time of assembly of a conventional parking lock mechanism 300, the lock claw 50 of the parking pawl 52 and meshing teeth 304a of a parking gear 304 are always not meshed with each other as shown in Fig. 9, so that an assembly error can easily be detected without using a special detection device.

As described above, according to this example, the portion of the parking pawl 52 provided with the lock claw 50 has the surface P2 that is formed on the front side in the movement direction of the cam 54 at the time of switching from the non-lock state to the lock state and that bulges in the movement direction, and therefore, for example, as compared to the case that the surface P1 formed on the rear side in the movement direction of the cam 54 bulges, the distance L1 can be shortened between the position of the center of gravity G1 of the parking pawl 52 and the action line X of the load F input from the cam 54 to the parking pawl 52. Thus, the rotation moment acting on the parking pawl 52 can be restrained from increasing due to an increase in the plate thickness of the parking pawl 52. Consequently, the tilt of the parking pawl 52 is suppressed, so that the ratchet behavior can be restrained from becoming unstable.

According to this example, since the return spring 82 urging the parking pawl 52 toward the non-lock side is included, the parking lock mechanism 46 can be prevented from switching to the lock state without driver's intention. Since the notch 78 of the parking pawl 54 is brought into contact with the tapered surface 70 of the cam 54, the parking pawl 52 can smoothly be pivoted when the cam 54 moves to the lock side.

Although the example of the present invention has been described in detail with reference to the drawings, the present invention is also applicable in other forms.

For example, although the parking lock mechanism 46 is applied to the hybrid vehicle 10 of the FF type in the example, the present invention is not necessarily limited thereto. For example, the vehicle 10 may be of the FR type and is not limited to a hybrid vehicle. In short, the present invention is appropriately applicable to any vehicle including a parking lock mechanism.

Although the cam mechanism 56 is actuated by the actuator 58 in the example, the cam mechanism 56 may be actuated by a mechanical link mechanism. Even in this case, the rigidity of the parking pawl 52 becomes higher as the plate thickness of the lock claw 50 of the parking pawl 52 increases, so that a link mechanism having a large transmitted load can be used.

Although the parking pawl 52 has the plate thickness made larger in the portion provided with the lock claw 50 in the example, the range of the portion having the larger plate thickness may further be expanded to the extent that an increase in rotational inertia of the parking pawl 52 causes no problem.

The above description is merely an embodiment and the present invention can be implemented in variously modified and improved forms based on the knowledge of those skilled in the art.

### REFERENCE SIGNS LIST

14: Drive gear (Rotating member)
36: Drive wheels
46: Parking lock mechanism
48: Parking gear
50: Lock claw
52: Parking pawl
54: Cam
56: Cam mechanism
62: Parking rod
70: Tapered surface
72: Cam spring
74: Large diameter portion
78: Notch
82: Return spring
P2: A surface of the parking pawl that is formed on the front side in a movement direction of the cam

## Claims

1. A parking lock mechanism (46) comprising:
a parking gear (48) integrally disposed on a rotating member (14) mechanically coupled to a drive wheel (36);
a plate-shaped parking pawl (52) provided with a lock claw (50) configured to mesh with the parking gear and pivoted for switching between a lock state in which the lock claw is meshed with the parking gear and a non-lock state in which meshing between the lock claw and the parking gear is released; and
a cam mechanism (56) including a cam (54) in contact with the parking pawl and moving the cam in parallel with a rotation axis (CL) of the parking gear to pivot the parking pawl,
the parking pawl having a plate thickness made larger in a portion provided with the lock claw as compared to the other portions of the parking pawl, wherein
the portion provided with the lock claw of the parking pawl has a surface (P2) that is formed on the front side in a movement direction of the cam at the time of switching from the non-lock state to the lock state and that bulges in the movement direction.

2. The parking lock mechanism according to claim 1, further comprising a return spring (82) urging the parking pawl to the non-lock state side.

3. The parking lock mechanism according to claim 1 or 2, wherein
the cam is provided with a conical tapered surface (70), and wherein
a taper-shaped notch (78) configured to be brought into contact with the tapered surface of the cam is formed on a surface (PI) of the parking pawl located on the rear side in the movement direction of the cam at the time of switching from the non-lock state to the lock state.

4. The parking lock mechanism according to any one of claims 1 to 3, wherein
the cam mechanism includes a parking rod (62) moving parallel to the rotation axis of the parking gear, and a cam spring (72) urging the cam toward a leading end of the parking rod, wherein
the cam is attached to the parking rod,
the cam is inserted through the parking rod relatively movably in an axial direction with respect to the parking rod and is urged toward the leading end of the parking rod by the cam spring, and
the leading end of the parking rod is provided with a large diameter portion (74) coming into contact with the cam and restricting the movement of the cam.
